# EUROPÄISCHE PATENTSCHRIFT

(11) **EP 2 219 255 B1**
(45) Veröffentlichungstag und Bekanntmachung des Hinweises auf die Patenterteilung: **23.11.2011**
(21) Anmeldenummer: 10152232.4
(22) Anmeldetag: 01.02.2010
(51) Int. Cl.: H01M 8/02, H01M 8/12

(54) **Verfahren zur Herstellung einer elektrisch isolierenden Dichtungsanordnung und Brennstoffzellenstack mit einer Dichtungsanordnung zum Abdichten zwischen zwei Bauteilen des Brennstoffzellenstacks**
Method for producing an electrically insulating seal assembly and fuel cell stack comprising a seal assembly for sealing between two components of the fuel cell stack
Procédé de fabrication d'un agencement d'étanchéité à isolation électrique et bloc de pile à combustible comprenant un agencement d'étanchéité destiné à étanchéifier entre deux composants d'un bloc de pile à combustible

(30) Priorität: 12.02.2009 DE 102009008672
(43) Veröffentlichungstag der Anmeldung: 18.08.2010
(73) Patentinhaber: ElringKlinger AG, 72581 Dettingen (DE)
(72) Erfinder: Kiefer, Thomas, 72574 Bad Urach (DE); Maier, Uwe, 72760 Reutlingen (DE)
(74) Vertreter: Hoeger, Stellrecht & Partner Patentanwälte

(56) Entgegenhaltungen:
- EP-A2- 1 492 190
- WO-A1-2009/095039
- DE-A1-102005 048 213
- JP-A- 2006 273 658
- US-B1- 6 430 966

## Beschreibung

Die vorliegende Erfindung betrifft ein Verfahren zur Herstellung einer elektrisch isolierenden Dichtungsanordnung zum Abdichten zwischen zwei Bauteilen eines Brennstoffzellenstacks.

Die Herstellung geeigneter Dichtungssysteme ist ein Schwerpunkt bei der Entwicklung von Hochtemperatur-Brennstoffzellensystemen (sogenannten SOFC-Brennstoffzellen). Solche Dichtungssysteme müssen hohen Anforderungen an die Gasdichtigkeit, elektrische Isolation, chemische Stabilität und Toleranz gegenüber mechanischer Beanspruchung (insbesondere beim Thermozyklieren) genügen.

Es ist bereits bekannt, zur Abdichtung in Brennstoffzellensystemen Glaslotdichtungen einzusetzen. Solche Glaslotdichtungen zeigen eine gute Gasdichtigkeit, elektrische Isolation und chemische Beständigkeit. Das Glaslot wird beim Fügezyklus weich, bevor es kristallisiert und aushärtet. Durch keramische Abstandshalter kann der Dichtspalt der Glaslotdichtung eingestellt werden. Übliche Dicken liegen dabei im Bereich von 300 um +/- 50 um.

Solche Glastlotdichtungen zeigen aber bei den verwendeten relativ hohen Schichtdicken nur geringe Toleranzen gegenüber mechanischer Beanspruchung beim Thermozyklieren, bedingt durch die schlechte Wärmeleitfähigkeit und das spröde Verhalten des Werkstoffes.

Ferner ist es bekannt, zur Abdichtung in Brennstoffzellensystemen Metalllotdichtungen einzusetzen. Solche Metalllotdichtungen weisen besonders bei der Thermozyklierung aufgrund ihres duktilen Verhaltens Vorteile auf. Das Metalllot ist jedoch als elektrischer Isolator ungeeignet, weshalb eine zusätzliche Isolationsschicht vorgesehen werden muss. Es ist beispielsweise bekannt, als Isolationsschicht eine im Vakuumplasmaspritzverfahren hergestellte Aluminium-Magnesium-Spinell-Schicht zu verwenden.

Die Herstellung einer solchen Isolationsschicht mittels des Vakuumplasmaspritzverfahrens ist jedoch ein aufwendiger und kostenintensiver Prozessschritt. Aufgrund der herstellungsbedingten Toleranzen müssen entsprechend hohe Sicherheitsfaktoren gewählt werden, was in einer hohen Schichtdicke der Isolationsschicht resultiert, womit eine erhöhter Materialverbrauch verbunden ist. Außerdem induziert eine dickere Isolationsschicht des Aluminium-Magnesium-Spinells, welcher einen anderen thermischen Ausdehnungskoeffizienten aufweist als die in der Brennstoffzelleneinheit verwendeten Stahlmaterialien, Eigenspannungen. Diese Eigenspannungen können Risse und damit Undichtigkeiten im Brennstoffzellensystem verursachen.

Die JP 2006 273658 A offenbart ein Verfahren gemäß dem Oberbegriff von Anspruch 1.

Der vorliegenden Erfindung liegt die Aufgabe zugrunde, ein Verfahren zur Herstellung einer elektrisch isolierenden Dichtungsanordnung zum Abdichten zwischen zwei Bauteilen eines Brennstoffzellenstacks zu schaffen, mittels welchem eine im Betrieb des Brennstoffzellenstacks langzeitstabile Dichtungsanordnung mit guter Gasdichtigkeit und guter elektrischer Isolationsfähigkeit herstellbar ist.

Diese Aufgabe wird erfindungsgemäß durch ein Verfahren zur Herstellung einer elektrisch isolierenden Dichtungsanordnung zum Abdichten zwischen zwei Bauteilen eines Brennstoffzellenstacks nach Anspruch 1 gelöst.

Der vorliegenden Erfindung liegt das Konzept zugrunde, eine bei der Betriebstemperatur des Brennstoffzellenstacks (von beispielsweise ungefähr 800°C) elektrisch isolierende Isolationsschicht als eine Dünnschicht aus Glas, aus Glas/Keramik oder aus Keramik auszubilden.

Dabei wird als eine "Dünnschicht" im Rahmen dieser Beschreibung und der beigefügten Ansprüche eine Schicht mit einer Schichtdicke von höchstens ungefähr 100 µm angesehen.

Durch die Verwendung einer solch geringen Schichtdicke wird die mechanische Stabilität der als Dünnschicht ausgebildeten Isolationsschicht beim Thermozyklieren deutlich gegenüber einer herkömmlichen Glaslotschicht verbessert.

Durch die Verwendung eines metallischen Lotes weist die erfindungsgemäß hergestellte Dichtungsanordnung die mit dem duktilen Verhalten des Metalllotes verbundenen Vorteile auf.

Durch das Eintauchen des mit der Dünnschicht zu versehenden Bauteils in das flüssige Ausgangsmaterial und/oder durch Aufspritzen des flüssigen Ausgangsmaterials auf das mit der Dünnschicht zu versehende Bauteil wird die zu beschichtende Oberfläche des betreffenden Bauteils glasiert und mit einer dünnen Schicht des Ausgangsmaterials versehen.

Die beiden abzudichtenden Bauteile des Brennstoffzellenstacks sind vorzugsweise metallische Bauteile, die insbesondere aus einem Stahlmaterial gebildet sein können.

Die Dicke der Dünnschicht beträgt vorzugsweise höchstens ungefähr 50 µm.

Um eine ausreichende elektrische Isolationswirkung zu gewährleisten, beträgt die Dicke der Dünnschicht vorzugsweise mindestens ungefähr 0,5 µm, insbesondere mindestens ungefähr 5 µm.

Um zu vermeiden, dass das metallische Lot und das Material der Dünnschicht direkt miteinander in Kontakt kommen und dadurch in abträglicher Weise miteinander in Wechselwirkung treten, kann es günstig sein, wenn auf der Dünnschicht eine metallische Beschichtung erzeugt wird, bevor das mit der Dünnschicht versehene Bauteil mit dem anderen abzudichtenden Bauteil mittels des metallischen Lotes verlötet wird.

Eine solche metallische Beschichtung kann insbesondere dadurch auf der Dünnschicht erzeugt werden, dass ein separat hergestelltes, metallisches Zwischenelement mit der Dünnschicht in Kontakt gebracht wird.

Ein solches metallisches Zwischenelement kann insbesondere durch Versintern fest mit der Dünnschicht verbunden werden.

Eine metallische Beschichtung ist vorzugsweise zwischen der Lotschicht und einer derselben benachbarten Dünnschicht angeordnet. Dabei steht die metallische Beschichtung vorzugsweise mit der Lotschicht und/oder mit der Dünnschicht in direktem Kontakt.

Um die elektrische Isolationswirkung der Dichtungsanordnung zu verbessern, ist vorgesehen, dass mindestens zwei voneinander beabstandete Dünnschichten erzeugt werden, welche ein Glasmaterial und/oder ein keramisches Material umfassen.

Um die elektrische Isolationswirkung der Dichtungsanordnung bei der Betriebstemperatur des Brennstoffzellenstacks weiter zu verbessern, kann vorgesehen sein, dass mindestens drei voneinander beabstandete Dünnschichten erzeugt werden, welche ein Glasmaterial und/oder ein keramisches Material umfassen.

Dabei kann vorgesehen sein, dass mindestens zwei Dünnschichten an demselben der abzudichtenden Bauteile erzeugt werden.

Ferner können mindestens drei solcher Dünnschichten an demselben der abzudichtenden Bauteile erzeugt werden.

Alternativ oder ergänzend hierzu kann auch vorgesehen sein, dass mindestens zwei Dünnschichten an zwei verschiedenen der abzudichtenden Bauteile erzeugt werden.

Zwei Dünnschichten an demselben abzudichtenden Bauteil werden vorzugsweise durch eine dazwischen liegende metallische Schicht, beispielsweise in Form eines separat hergestellten metallischen Zwischenelements, voneinander getrennt.

Um die chemische Beständigkeit der Dünnschicht zu erhöhen und eventuelle Wechselwirkungen mit dem metallischen Lot bei der Verlötung der beiden Bauteile zu vermindern, ist es günstig, wenn das erfindungsgemäße Verfahren als weiteren Verfahrensschritt eine Wärmebehandlung mindestens einer erzeugten Dünnschicht umfasst, bei welcher das Material der Dünnschicht zumindest teilweise aufgeschmolzen wird und zumindest teilweise kristallisiert.

Bei der teilweisen Kristallisation der Dünnschicht bleiben amorphe Restglasphasen bestehen, so dass eine teilweise aus Glas und teilweise aus keramischem Material bestehende Dünnschicht erzeugt wird.

Eine solche Wärmebehandlung zur teilweisen Auskristallisation der Dünnschicht ist besonders vorteilhaft, wenn die in dieser Weise behandelte Dünnschicht in direkten Kontakt mit dem metallischen Lot kommt.

Um die mechanische Festigkeit der Lotverbindung zwischen einer Dünnschicht und dem weiteren abzudichtenden Bauteil zu steigern, ist es von Vorteil, wenn das erfindungsgemäße Verfahren als weiteren Verfahrensschritt das Erzeugen mindestens einer Benetzungswinkelbegrenzungsschicht an einem mit einer Dünnschicht versehenen abzudichtenden Bauteil vor dem Verlöten mit dem anderen abzudichten Bauteil umfasst.

Diese Benetzungswinkelbegrenzungsschicht grenzt in der fertigen Dichtungsanordnung direkt an die Lotschicht an.

Eine solche Benetzungswinkelbegrenzungsschicht umfasst vorzugsweise ein Oxidkeramikmaterial, wobei das Oxidkeramikmaterial beispielsweise Kupferoxid, Aluminiumoxid, Titanoxid, Zirkoniumoxid und/oder Yttrium-stabilisiertes Zirkoniumoxid umfassen kann.

Vorzugsweise wird die Benetzungswinkelbegrenzungsschicht aus einer CuO-Paste erzeugt.

Um für die Dünnschicht ein besonders geringes Spaltmaß einhalten zu können, ist es günstig, wenn die erzeugte Dünnschicht Partikel enthält, welche als bei der Betriebstemperatur des Brennstoffzeltenstacks elektrisch isolierende Abstandshalter dienen.

Insbesondere kann vorgesehen sein, dass die erzeugte Dünnschicht Partikel enthält, welche ein Oxidkeramikmaterial umfassen.

Wenn das Ausgangsmaterial für die Dünnschicht in den flüssigen Zustand überführt wird, um eines der Bauteile in das flüssige Ausgangsmaterial eintauchen und/oder um das flüssige Ausgangsmaterial auf zumindest einen Teil eines der abzudichtenden Bauteile aufspritzen zu können, bleiben diese Partikel im festen Zustand, so dass sie als Abstandshalter zur Einstellung einer Mindestdicke der erzeugten Dünnschicht dienen können.

Vorzugsweise umfasst das Oxidkeramikmaterial ein Metalloxidmaterial, wobei das Metalloxidmaterial als Metallkationen insbesondere Al, Zr und/oder Mg enthalten kann.

Der mittlere Durchmesser der Partikel liegt vorzugsweise bei ungefähr 10 µm bis ungefähr 100 µm.

Das Glasmaterial und/oder das Keramikmaterial, welches in dem flüssigen Ausgangsmaterial enthalten ist, kann insbesondere ein Glas des Systems BaO - CaO - SiO₂, ein Glas des Systems BaO - CaO - SiO₂ - Al₂O₃ und/oder ein Glas des Systems BaO - CaO - SiO₂ -Al₂O₃ - B₂O₃ umfassen.

Das metallische Lot für die Verlötung der beiden Bauteile miteinander kann in einem einzigen Arbeitsgang, als Legierung, auf das mit der Dünnschicht versehene Bauteil und/oder auf das jeweils andere abzudichtende Bauteil aufgetragen und/oder, beispielsweise als Lötfolie, zwischen die beiden Bauteile eingebracht werden.

Das Auftragen des metallischen Lots kann beispielsweise mittels eines Dispensers, mittels eines Musterdruckverfahrens (insbesondere eines Siebdruckverfahrens), galvanisch oder durch Plattieren mit einer Folie aus dem metallischen Lot erfolgen.

Verschiedene Bestandteile des Lotes können auch durch sequentielle Beschichtung, in verschiedenen aufeinanderfolgenden Beschichtungsvorgängen, auf das mit der Dünnschicht versehene Bauteil und/oder auf das jeweils andere abzudichtende Bauteil aufgebracht werden.

Die Verlötung des mit der Dünnschicht versehenen Bauteils mit dem anderen abzudichtenden Bauteil mittels des metallischen Lotes kann beispielsweise durch einen herkömmlichen Lotprozess in einem Ofen und/oder durch Induktionslöten erfolgen.

Die Verwendung elektrisch isolierender Abstandshalter ist besonders günstig, wenn mindestens eine Dünnschicht der Dichtungsanordnung durch eine metallische Beschichtung, insbesondere ein metallisches Zwischenelement, von dem metallischen Lot getrennt ist.

Die vorliegende Erfindung betrifft ferner eine Dichtungsanordnung zum Abdichten zwischen zwei Bauteilen eines Brennstoffzellenstacks.

Der vorliegenden Erfindung liegt die weitere Aufgabe zugrunde, eine Dichtungsanordnung zum Abdichten zwischen zwei Bauteilen eines Brennstoffzellenstacks zu schaffen, welche im Betrieb des Brennstoffzellenstacks langzeitstabil ist und eine gute Gasdichtigkeit und eine gute elektrische Isolationsfähigkeit aufweist.

Diese Aufgabe wird erfindungsgemäß durch eine Dichtungsanordnung zum Abdichten zwischen zwei Bauteilen eines Brennstoffzellenstacks nach Anspruch 15 gelöst.

Die erfindungsgemäße Dichtungsanordnung weist somit mindestens eine als Dünnschicht ausgebildete, bei der Betriebstemperatur des Brennstoffzellenstacks (von beispielsweise ungefähr 800°C) elektrisch isolierende Isolationsschicht auf, die in Verbindung mit dem metallischen Lot der Lotschicht die Vorteile von Glaslotdichtungen und Metalllotdichtungen miteinander vereinigt.

Dabei kann die Dünnschicht durch Glasieren der Oberfläche eines der abzudichtenden Bauteile mittels eines Tauchvorgangs oder eines Spritzvorgangs erzeugt werden.

Die erfindungsgemäße Dichtungsanordnung eignet sich insbesondere zur Verwendung in einer Hochtemperatur-Brennstoffzelle, insbesondere einer SOFC (Solid Oxide Fuel Cell), mit einer Betriebstemperatur von beispielsweise mindestens 600°C.

Weitere Merkmale und Vorteile der Erfindung sind Gegenstand der nachfolgenden Beschreibung und der zeichnerischen Darstellung von Ausführungsbeispielen.

In den Zeichnungen zeigen:

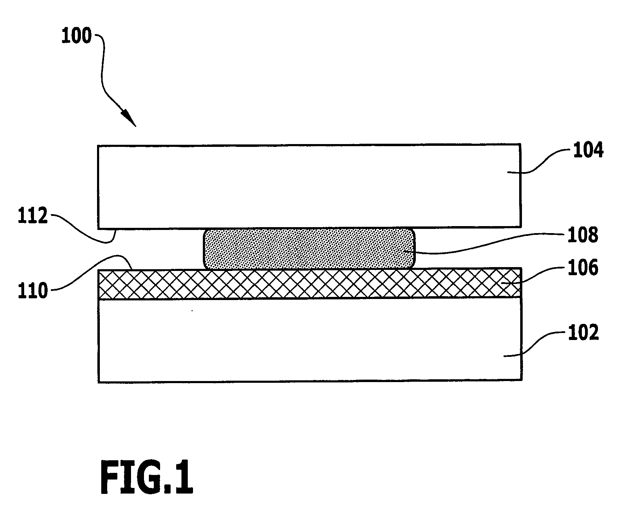

- Fig. 1: eine schematische Darstellung einer nicht in den Schutzbereich der Ansprüche fallenden Dichtungsanordnung für eine Brennstoff- zelleneinheit, welche zwei abzudichtende Bauteile, eine an einem der Bauteile angeordnete elektrisch isolierende Dünnschicht und eine die Dünnschicht mit dem anderen abzudichtenden Bauteil verbindende Lotschicht umfasst;

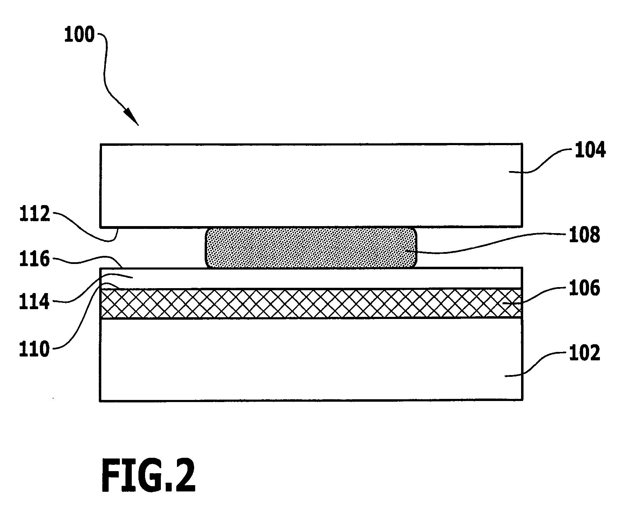

- Fig. 2: einen schematischen Schnitt durch eine nicht in den Schutz- bereich der Ansprüche fallende zweite Ausführungsform einer Dichtungsanordnung, welche neben den beiden abzudichtenden Bauteilen und der elektrisch isolierenden Dünnschicht ein fest mit der Dünnschicht verbundenes Zwischenelement und eine das Zwi- schenelement mit einem der abzudichtenden Bauteile verbin- dende Lotschicht umfasst;

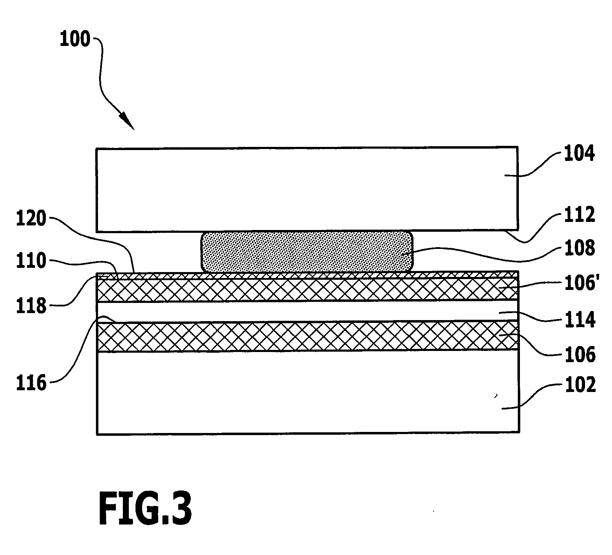

- Fig. 3: einen schematischen Schnitt durch eine dritte Ausführungsform einer Dichtungsanordnung, welche neben den beiden abzudich- tenden Bauteilen eine an dem ersten abzudichtenden Bauteil an- geordnete elektrisch isolierende erste Dünnschicht, ein fest mit der ersten Dünnschicht verbundenes Zwischenelement, eine fest mit dem Zwischenelement verbundene elektrisch isolierende zweite Dünnschicht und eine die zweite Dünnschicht mit dem zweiten Bauteil verbindende Lotschicht umfasst;

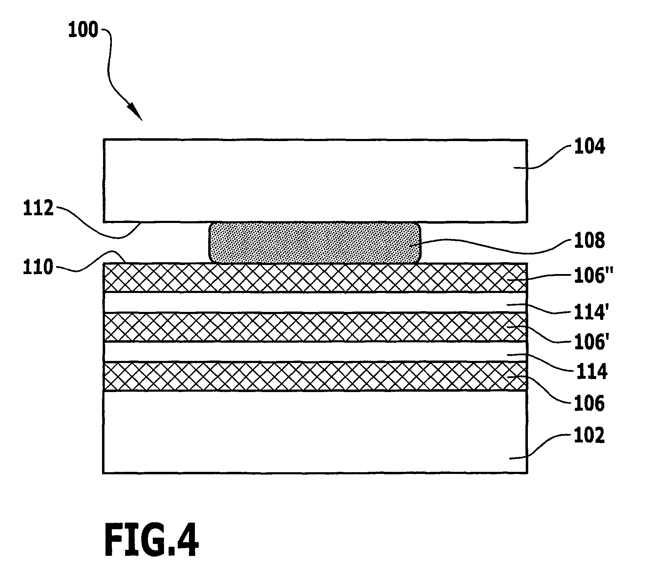

- Fig. 4: einen schematischen Schnitt durch eine vierte Ausführungsform einer Dichtungsanordnung, welche neben den beiden abzudich- tenden Bauteilen eine fest mit dem ersten Bauteil verbundene elektrisch isolierende erste Dünnschicht, ein fest mit der ersten Dünnschicht verbundenes erstes Zwischenelement, eine fest mit dem ersten Zwischenelement verbundene elektrisch isolierende zweite Dünnschicht, ein fest mit der zweiten Dünnschicht verbun- denes zweites Zwischenelement, eine fest mit dem zweiten Zwi- schenelement verbundene elektrisch isolierende dritte Dünn- schicht und eine die dritte Dünnschicht mit dem zweiten Bauteil verbindende Lotschicht umfasst;

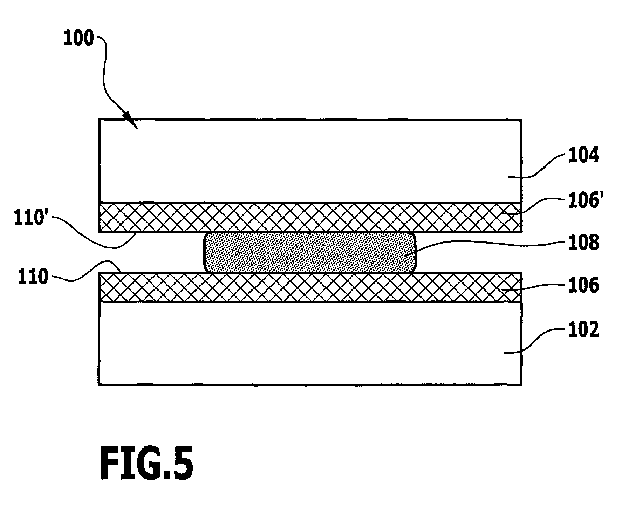

- Fig. 5: einen schematischen Schnitt durch eine fünfte Ausführungsform einer Dichtungsanordnung, welche neben den beiden abzudich- tenden Bauteilen eine elektrisch isolierende erste Dünnschicht an dem ersten Bauteil und eine elektrisch isolierende zweite Dünn- schicht an dem zweiten Bauteil sowie eine die beiden Dünn- schichten miteinander verbindende Lotschicht umfasst; und

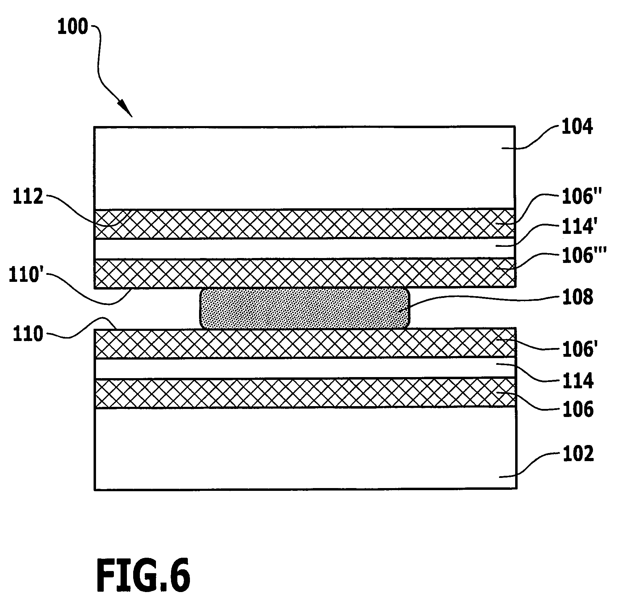

- Fig. 6: einen schematischen Schnitt durch eine sechste Ausführungsform einer Dichtungsanordnung, welche neben den beiden abzudich- tenden Bauteilen eine fest mit dem ersten Bauteil verbundene elektrisch isolierende erste Dünnschicht, ein fest mit der ersten Dünnschicht verbundenes erstes Zwischenelement, eine fest mit dem ersten Zwischenelement verbundene elektrisch isolierende zweite Dünnschicht, eine fest mit dem zweiten Bauteil verbun- dene elektrisch isolierende dritte Dünnschicht, ein fest mit der dritten Dünnschicht verbundenes zweites Zwischenelement, eine fest mit dem zweiten Zwischenelement verbundene elektrisch iso- lierende vierte Dünnschicht und eine die zweite Dünnschicht mit der vierten Dünnschicht verbindende Lotschicht umfasst.

Gleiche oder funktional äquivalente Elemente sind in allen Figuren mit denselben Bezugszeichen bezeichnet.

Ein Verfahren zur Herstellung der in Fig. 1 dargestellten ersten Ausführungsform einer als Ganzes mit 100 bezeichneten Dichtungsanordnung zum Abdichten zwischen einem metallischen ersten Bauteil 102 und einem metallischen zweiten Bauteil 104 eines Brennstoffzellenstacks mittels einer zwischen den Bauteilen 104 und 102 angeordneten, elektrisch isolierenden, aus Glasmaterial und/oder Keramikmaterial gebildeten elektrisch isolierenden Dünnschicht 106 umfasst folgende Verfahrensschritte:
- Erzeugen der Dünnschicht 106, welche ein Glasmaterial und/oder ein Keramikmaterial umfasst, durch zumindest teilweises Eintauchen des ersten Bauteils 102 in ein flüssiges Ausgangsmaterial und/oder durch Aufspritzen eines flüssigen Ausgangsmaterials auf zumindest einen Teil des abzudichtenden ersten Bauteils 102;
- Verlöten des mit der Dünnschicht 106 versehenen ersten Bauteils 102 mit dem zweiten abzudichtenden Bauteil 104 mittels einer Lotschicht 108 aus einem metallischen Lotmaterial.

Bei dem ersten Bauteil 102 kann es sich beispielsweise um ein Gehäuseoberteil eines Gehäuses einer Brennstoffzelleneinheit handeln, und bei dem zweiten Bauteil 104 kann es sich um ein Gehäuseunterteil einer in einer Stapelrichtung eines Brennstoffzellenstacks auf die erste Brennstoffzelleneinheit folgenden weiteren Brennstoffzelleneinheit handeln.

Solche Brennstoffzelleneinheiten mit zweiteiligen Gehäusen, die aus einem Gehäuseunterteil und einem Gehäuseoberteil zusammengesetzt sind, sind beispielsweise in der DE 103 58 458 A1 offenbart.

Das erste Bauteil 102 und/oder das zweite Bauteil 104 können insbesondere in der jeweiligen Brennstoffzelleneinheit als Bipolarplatte oder Interkonnektor dienen.

Beide Bauteile 102 und 104 können insbesondere einen Chromoxid bildenden Stahl umfassen.

Die beiden Bauteile 102 und 104 sind beispielsweise aus einem ferritischen, Chromoxid bildenden Edelstahl gebildet, beispielsweise aus dem Edelstahl Crofer22APU, welcher folgende Zusammensetzung aufweist:
22,2 Gewichtsprozent Cr; 0,46 Gewichtsprozent Mn; 0,06 Gewichtsprozent Ti;
0,07 Gewichtsprozent La; 0,002 Gewichtsprozent C; 0,02 Gewichtsprozent Al;
0,03 Gewichtsprozent Si; 0,004 Gewichtsprozent N; 0,02 Gewichtsprozent Ni; Rest Eisen.

Der Stahl mit der Bezeichnung Crofer22APU, der von dem Hersteller ThyssenKrupp AG, Deutschland, angeboten wird, hat die Werkstoffbezeichnungen 1.4760 nach EN und S44535 nach UNS.

Für die Herstellung der Dünnschicht 106 an dem ersten Bauteil 102 wird ein flüssiges Ausgangsmaterial hergestellt, das ein Glasmaterial und/oder ein Keramikmaterial enthält.

Das Ausgangsmaterial kann beispielsweise ein Glasmaterial aus einem der folgenden Systeme sein:
a) BaO - CaO - SiO₂;
b) BaO - CaO - SiO₂ - Al₂O₃;
c) BaO - CaO - SiO₂ - Al₂O₃ - B₂O₃.

Einem solchen Glasmaterial können insbesondere bei der Betriebstemperatur des Brennstoffzellenstacks elektrisch isolierende Materialien, beispielsweise Al₂O₃, Al-Mg-Spinell, Yttrium-stabilisiertes Zirkoniumdioxid, Forsterit (Mg-Si-Spinell) und/oder MgO, beigemischt werden.

Die Beimischung der vorstehend genannten Materialien zu dem Glasmaterial kann in jedem beliebigen Gewichtsverhältnis erfolgen.

Das beigemischte Material kann in beliebiger Form vorliegen, beispielsweise als Pulver oder als Fasern.

Das Glasmaterial, das Keramikmaterial und/oder die Mischung aus Glasmaterial und Keramikmaterial, woraus das Ausgangsmaterial für die Herstellung der Dünnschicht gebildet werden soll, wird fein gemahlen und geschmolzen. Die glühend heiße Schmelze wird in Wasser gegossen, abgeschreckt, und die dabei entstehende körnige glasartige Fritte wird wieder fein gemahlen. Beim Mahlen können 30-40 Gewichtsprozent Wasser, Ton und Quarzmehl zugesetzt werden.

Die so entstehende Suspension kann einige Tage ruhen, bevor sie weiterverwendet wird.

Das mit der Dünnschicht 106 zu versehende erste Bauteil 102 wird ausgeglüht, in Säure geätzt, mit Laugen neutralisiert und gewaschen.

Anschließend wird das erste Bauteil 102 in das in der vorstehenden Weise als Suspension ausgebildete flüssige Ausgangsmaterial eingetaucht und wieder aus demselben herausgezogen, so dass ein Teil des Ausgangsmaterials als Dünnschicht an der zu beschichtenden Oberfläche des ersten Bauteils 102 anhaftet.

Alternativ oder ergänzend hierzu kann das flüssige Ausgangsmaterial in Form einer Suspension auch auf die zu beschichtende Oberfläche des ersten Bauteils 102 aufgespritzt werden, um die Dünnschicht 106 auszubilden.

Bei einer anderen, alternativen Ausführungsform des Verfahrens zur Herstellung der Dünnschicht 106 wird das flüssige Ausgangsmaterial nicht in Form einer Suspension hergestellt, sondern in Form einer Schmelze.

Hierzu wird das Glasmaterial, das Keramikmaterial oder die Mischung aus Glasmaterial und Keramikmaterial, aus welcher das Ausgangsmaterial gebildet werden soll, lediglich aufgeschmolzen, und das erste Bauteil 102 wird in die Schmelze eingetaucht und wieder aus der Schmelze entnommen, wodurch ein Teil des flüssigen Ausgangsmaterials an den zu beschichtenden Oberflächen des ersten Bauteils 102 haften bleibt.

Alternativ oder ergänzend hierzu kann das flüssige Ausgangsmaterial in Form einer Schmelze auch auf die zu beschichtende Oberfläche des ersten Bauteils 102 aufgespritzt werden, um die Dünnschicht 106 auszubilden.

Nach dem Auftragen des flüssigen Ausgangsmaterials durch Eintauchen des zu beschichtenden Bauteils 102 in eine Suspension, durch Aufspritzen einer Suspension auf das zu beschichtende Bauteil 102, durch Eintauchen des zu beschichtenden Bauteils 102 in eine Schmelze des Ausgangsmaterials und/oder durch Aufspritzen einer Schmelze des Ausgangsmaterials auf das zu beschichtende Bauteil 102 erfolgt eine Wärmebehandlung der durch Anhaften des Ausgangsmaterials an dem zu beschichtenden Bauteil 102 gebildeten Schicht aus dem Ausgangsmaterial.

Eine solche Wärmebehandlung kann beispielsweise wie folgt durchgeführt werden:
- Erhitzen des Bauteils mit dem daran haftenden Ausgangsmaterial mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 100°C bis ungefähr 500°C;
- Halten der Temperatur von ungefähr 100°C bis ungefähr 500°C während eines Haltezeitraums von ungefähr 1 Stunde bis ungefähr 10 Stunden, wodurch gegebenenfalls vorhandene Lösungsmittel oder Bindemittel ausgebrannt werden;
- weiteres Erhitzen des Bauteils mit der anhaftenden Beschichtung mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 600°C bis ungefähr 1.200°C, vorzugsweise im Bereich von ungefähr 850°C bis ungefähr 1.000°C;
- Halten der Temperatur von ungefähr 600°C bis ungefähr 1.200°C, vorzugsweise der Temperatur von ungefähr 850°C bis ungefähr 1.000°C, während eines Haltezeitraums von bis zu 100 Stunden, vorzugsweise von ungefähr 1 Stunde bis ungefähr 10 Stunden;
- Abkühlen des Bauteils und der daran anhaftenden Beschichtung mit einer Temperatursenkungsrate von höchstens ungefähr 10 K/min, vorzugsweise von höchstens ungefähr 5 K/min, auf eine Endtemperatur von ungefähr 20°C.

Insbesondere wenn als Ausgangsmaterial ein Glasmaterial verwendet wird, kann beispielsweise die folgende Wärmebehandlung des Bauteils mit der daran haftenden Beschichtung aus dem Ausgangsmaterial durchgeführt werden:
- Erhitzen des Bauteils mit dem daran haftenden Ausgangsmaterial mit einer Temperatursteigerungsrate von weniger als 2 K/min auf eine Temperatur von ungefähr 400°C;
- Halten der Temperatur von ungefähr 400°C während eines Haltezeitraums von ungefähr 30 Minuten;
- weiteres Erhitzen des Bauteils mit der anhaftenden Beschichtung mit einer Temperatursteigerungsrate von weniger als 20 K/min auf eine Temperatur von ungefähr 900°C;
- Halten der Temperatur von ungefähr 900°C während eines Haltezeitraums von ungefähr 60 Minuten;
- Abkühlen des Bauteils mit der daran haftenden Beschichtung mit einer Temperatursenkungsrate von weniger als 20 K/min auf eine Temperatur von ungefähr 850°C;
- Halten der Temperatur von ungefähr 850°C während eines Haltezeitraums von ungefähr 420 Minuten;
- Abkühlen des Bauteils und der daran anhaftenden Beschichtung mit einer Temperatursenkungsrate von weniger als 20 K/min auf eine Endtemperatur von ungefähr 20°C.

Durch die Beschichtung des ersten Bauteils 102 mit dem flüssigen Ausgangsmaterial und der anschließenden Wärmebehandlung wird eine fest an dem ersten Bauteil 102 anhaftende, bei der Betriebstemperatur der Brennstoffzelleneinheit von beispielsweise 800°C elektrisch isolierende Dünnschicht 106 erzeugt, deren Dicke höchstens ungefähr 100 µm, vorzugsweise höchstens ungefähr 50 µm, beträgt.

Die Mindestdicke der Dünnschicht 106 beträgt, um eine ausreichende elektrische Isolationswirkung zu gewährleisten, mindestens ungefähr 0,5 µm, vorzugsweise mindestens ungefähr 5 µm.

Durch die vorstehend beschriebene Wärmebehandlung der Beschichtung aus dem Glasmaterial wird das Glasmaterial aufgeschmolzen und teilweise kristallisiert.

Das flüssige Ausgangsmaterial, aus dem die Dünnschicht 106 gebildet wird, kann ferner in Bezug auf das Ausgangsmaterial inerte Keramikpartikel umfassen, die innerhalb der Dünnschicht 106 als Abstandshalter dienen, welche eine Mindestdicke der Dünnschicht 106 über die gesamte Breite der Dünnschicht 106 hinweg gewährleisten, so dass die Dicke der Dünnschicht 106 über deren gesamte Fläche hinweg mit hoher Genauigkeit eingestellt werden kann.

Die Keramikpartikel umfassen vorzugsweise ein Oxidkeramikmaterial.

Das Oxidkeramikmaterial kann insbesondere ein Metalloxidmaterial umfassen, wobei das Metalloxidmaterial als Metallkationen beispielsweise Al, Zr und/oder Mg enthalten kann.

Der mittlere Durchmesser der Keramikpartikel in der Dünnschicht 106 liegt vorzugsweise bei ungefähr 10 µm bis ungefähr 100 µm.

Der Gewichtsanteil der Keramikpartikel an der Dünnschicht 106 beträgt vorzugsweise höchstens 10 Gewichtsprozent, insbesondere höchstens 3 Gewichtsprozent.

Bei Verwendung eines Glasmaterials kann beispielsweise ein Anteil von 3 Gewichtsprozent Keramikpartikeln aus ZrO₂ als Abstandshalter verwendet werden, wobei der mittlere Durchmesser der ZrO₂-Partikel bei ungefähr 40 µm liegt.

Die als Abstandshalter dienenden Keramikpartikel bleiben fest und formstabil, während das Ausgangsmaterial für das Aufspritzen auf das zu beschichtende Bauteil bzw. für das Eintauchen des zu beschichtenden Bauteils in das Ausgangsmaterial in den flüssigen Zustand überführt wird.

Um die mechanische Festigkeit der Lotverbindung zwischen der Dünnschicht 106 und dem zweiten abzudichtenden Bauteil 104 zu steigern, ist es günstig, wenn der Benetzungswinkel des Lotmaterials an der freien Oberfläche 110 der Dünnschicht 106 gesenkt wird.

Dies kann erreicht werden, indem auf der Dünnschicht 106 eine Benetzungswinkelbegrenzungsschicht erzeugt wird.

Eine solche (in Fig. 1 nicht dargestellte) Benetzungswinkelbegrenzungsschicht umfasst vorzugsweise ein Oxidkeramikmaterial, wobei das Oxidkeramikmaterial beispielsweise Kupferoxid, Aluminiumoxid, Titanoxid, Zirkoniumoxid und/oder Yttrium-stabilisiertes Zirkoniumoxid enthalten kann.

Vorzugsweise wird die Benetzungswinkelbegrenzungsschicht aus einer CuO-Paste erzeugt.

Hierzu wird die freie Oberfläche 110 der Dünnschicht 106, beispielsweise mittels eines Dispensers, mit dem Oxidkeramikmaterial beschichtet, also beispielsweise mit der CuO-Paste, und anschließend das erste Bauteil 102 mit der Dünnschicht 106 und der Benetzungswinkelbegrenzungsschicht aus Oxidkeramikmaterial einer Wärmebehandlung unterzogen, in deren Verlauf die genannten Elemente auf eine Temperatur von ungefähr 850°C bis ungefähr 950°C erwärmt werden, wobei die Benetzungswinkelbegrenzungsschicht versintert und an die Dünnschicht 106 ansintert.

Anschließend wird das mit der Dünnschicht 106 und (wahlweise) mit der Benetzungswinkelbegrenzungsschicht versehene erste Bauteil 102 mittels eines metallischen Lotes mit dem zweiten Bauteil 104 verlötet.

Während des Lötvorgangs wird das Lotmaterial verflüssigt und ein Anpressdruck auf die miteinander zu verlötenden Bauteile 102 und 104 ausgeübt.

Geeignete metallische Lotmaterialien zur Erzeugung der Lotschicht 108 sind beispielsweise ein Nickelbasislot, ein Kupferbasislot oder ein Silberbasislot.

Geeignete Lotmaterialien sind insbesondere die folgenden:
- das Nickelbasislot mit der Bezeichnung Ni 102 gemäß der DIN EN 1044, mit der folgenden Zusammensetzung: 10 Gewichtsprozent Cr; 4,5 Gewichtsprozent Si; 3,1 Gewichtsprozent B; 3,0 Gewichtsprozent Fe; weniger als 0,06 Gewichtsprozent C; weniger als 0,02 Gewichtsprozent P; Rest Ni.
- das Kupferbasislot mit der Bezeichnung CU 202 gemäß der DIN EN 1044, mit der folgenden Zusammensetzung: 12 Gewichtsprozent Sn; 0,2 Gewichtsprozent P; Rest Cu.
- das Silberbasislot mit der Bezeichnung Ag4CuO, mit der folgenden Zusammensetzung: 96 mol-% Ag; 4 mol-% CuO.

Das metallische Lotmaterial kann auf die freie Oberfläche 112 des zweiten Bauteils 104, auf die freie Oberfläche der Dünnschicht 106 bzw., falls vorhanden, auf die freie Oberfläche einer Benetzungswinkelbegrenzungsschicht auf der Dünnschicht 106 aufgebracht und/oder (beispielsweise in Form einer Lötfolie) zwischen das zweite Bauteil 104 und die Dünnschicht 106 eingebracht werden.

Das Aufbringen des Lotmaterials kann mittels eines Dispensers, in einem Musterdruckverfahren (insbesondere in einem Siebdruckverfahren) oder galvanisch erfolgen.

Die Verlötung erfolgt in einem Ofen unter Erwärmung auf eine Löttemperatur im Bereich von ungefähr 970°C bis ungefähr 1.000°C.

Damit ist das Verfahren zur Herstellung einer elektrisch isolierenden Dichtungsanordnung 100 zum Abdichten zwischen den zwei Bauteilen 102 und 104 des Brennstoffzellenstacks abgeschlossen.

Die in Fig. 1 dargestellte erste Ausführungsform einer Dichtungsanordnung 100, bei welcher die Dünnschicht 106 direkt oder gegebenenfalls unter Zwischenschaltung einer keramischen Benetzungswinkelbegrenzungsschicht mit dem zweiten Bauteil 104 verlötet wird, bietet den Vorteil einer einfachen und kostengünstigen Herstellung.

Auftretende Scherkräfte beim Thermozyklieren des Brennstoffzellenstacks können bei dieser Dichtungsanordnung über das duktile Verhalten des metallischen Lotes in der Lotschicht 108 ausgeglichen werden.

Das metallische Lot aus der Lotschicht 108 kann aber unter Umständen mit der elektrisch isolierenden Dünnschicht 106 bzw. mit der Benetzungswinkelbegrenzungsschicht reagieren, was zur Folge haben kann, dass die elektrische Isolationswirkung der Dünnschicht 106 verloren geht oder der Verbund aus der Dünnschicht 106 und der Lotschicht 108 versprödet und somit keine Scherkräfte kompensieren kann.

Eine in Fig. 2 dargestellte zweite Ausführungsform der Dichtungsanordnung 100 unterscheidet sich von der in Fig. 1 dargestellten ersten Ausführungsform dadurch, dass die elektrisch isolierende Dünnschicht 106 nicht unmittelbar oder über eine keramische Benetzungswinkelbegrenzungsschicht an die Lotschicht 108 angrenzt, sondern stattdessen ein Zwischenelement 114 aus einem metallischen Material, insbesondere aus einem Stahlmaterial, zwischen der Dünnschicht 106 und der Lotschicht 108 angeordnet ist.

Das Zwischenelement 114 kann insbesondere aus demselben Stahlmaterial gebildet sein wie das erste Bauteil 102 und/oder das zweite Bauteil 104.

Dadurch, dass bei der zweiten Ausführungsform der Dichtungsanordnung 100 die Dünnschicht 106 durch das Zwischenelement 114 von der Lotschicht 108 getrennt ist, können keine abträglichen Wechselwirkungen zwischen dem metallischen Lot der Lotschicht 108 und dem Material der Dünnschicht 106 (bzw. dem Material einer auf der Dünnschicht 106 angeordneten Benetzungswinkelbegrenzungsschicht) auftreten.

Insbesondere können keine spröden Phasen durch Reaktion des metallischen Lots mit dem Material der Dünnschicht 106 entstehen. Die Duktilität des metallischen Lots der Lotschicht 108 bleibt daher bei dieser Ausführungsform in jedem Fall erhalten und kann beim Thermozyklieren des Brennstoffzellenstacks auftretende Scherkräfte kompensieren.

Bei der Herstellung der zweiten Ausführungsform der Dichtungsanordnung 100 gemäß Fig. 2 wird wie folgt vorgegangen:
An dem metallischen ersten Bauteil 102 wird durch Eintauchen in ein flüssiges Ausgangsmaterial und/oder durch Aufspritzen eines flüssigen Ausgangsmaterials die Dünnschicht 106 erzeugt.

Das metallische Zwischenelement 114 wird mit der freien Oberfläche 110 der Dünnschicht 106 in Kontakt gebracht.

Das erste Bauteil 102, das Zwischenelement 114 und die dazwischen angeordnete Dünnschicht 106 werden in einen Sinterofen eingebracht und auf eine Sintertemperatur erwärmt, so dass das Zwischenelement 114 durch Versinterung mit der Dünnschicht 106 fest verbunden wird.

Die Wärmebehandlung für die Versinterung des Zwischenelements 114 mit der Dünnschicht 106 kann unter einer Flächenpressung von ungefähr 1 N/cm² bis ungefähr 100 N/cm² erfolgen, mit welcher das Zwischenelement 114 und die Dünnschicht 106 während des Sintervorgangs gegeneinander gepresst werden.

Die Wärmebehandlung zum Versintern des Zwischenelements 114 mit der Dünnschicht 106 kann beispielsweise wie folgt durchgeführt werden:
- Erhitzen der Dünnschicht 106 und des daran anliegenden Zwischenelements 114 mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 100°C bis ungefähr 500°C;
- Halten der Temperatur von ungefähr 100°C bis ungefähr 500°C während eines Haltezeitraums von ungefähr 1 Stunde bis ungefähr 10 Stunden, wodurch gegebenenfalls vorhandene Lösungsmittel oder Bindemittel ausgebrannt werden;
- weiteres Erhitzen der Dünnschicht 106 und des daran anliegenden Zwischenelements 114 mit einer Temperatursteigerungsrate von ungefähr 1 K/min bis ungefähr 10 K/min, vorzugsweise von ungefähr 3 K/min bis ungefähr 5 K/min, auf eine Temperatur im Bereich von ungefähr 600°C bis ungefähr 1.200°C, vorzugsweise im Bereich von ungefähr 850°C bis ungefähr 1.000°C;

- Halten der Temperatur von ungefähr 600°C bis ungefähr 1.200°C, vorzugsweise der Temperatur von ungefähr 850°C bis ungefähr 1.000°C, während eines Haltezeitraums von bis zu 100 Stunden, vorzugsweise von ungefähr 1 Stunde bis ungefähr 10 Stunden;
- Abkühlen der Dünnschicht 106 und des daran anliegenden Zwischenelements 114 mit einer Temperatursenkungsrate von höchstens ungefähr 10 K/min, vorzugsweise von höchstens ungefähr 5 K/min, auf eine Endtemperatur von ungefähr 20°C.

Anschließend wird ein metallisches Lotmaterial auf die freie Oberfläche des Zwischenelements 114 und/oder auf die freie Oberfläche 112 des metallischen zweiten Bauteils 104 aufgetragen und/oder zwischen das Zwischenelement 114 und das zweite Bauteil 104 eingebracht, und das metallische zweite Bauteil 104 wird mit dem Zwischenelement 114 mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Eine in Fig. 3 dargestellte dritte Ausführungsform der Dichtungsanordnung 100 unterscheidet sich von der in Fig. 2 dargestellten zweiten Ausführungsform dadurch, dass das erste Zwischenelement 114 nicht unmittelbar an die Lotschicht 108 angrenzt, sondern stattdessen eine zweite Dünnschicht 106' zwischen dem ersten Zwischenelement 114 und der Lotschicht 108 angeordnet ist.

Die zweite Dünnschicht 106' ist aus einem bei der Betriebstemperatur des Brennstoffzellenstacks elektrisch isolierenden Glasmaterial und/oder Keramikmaterial gebildet.

Die zweite Dünnschicht 106' kann insbesondere aus demselben elektrisch isolierenden Material gebildet sein wie die erste Dünnschicht 106.

Ferner kann die zweite Dünnschicht 106' an ihrer freien Oberfläche 110 mit einer keramischen Begrenzungswinkelbegrenzungsschicht 118 versehen sein, wie dies vorstehend bereits im Zusammenhang mit der einzigen Dünnschicht 106 der in Fig. 1 dargestellten ersten Ausführungsform einer Dichtungsanordnung 100 beschrieben worden ist.

Die in Fig. 3 dargestellte dritte Ausführungsform der Dichtungsanordnung 100 bietet durch das Vorhandensein zweiter Dünnschichten 106 und 106' den Vorteil einer verbesserten elektrischen Isolationswirkung durch ein zweilagiges Dünnschicht-System.

Bei der Herstellung der dritten Ausführungsform der Dichtungsanordnung 100 gemäß Fig. 3 wird wie folgt vorgegangen:
An dem metallischen ersten Bauteil 102 wird durch Eintauchen in ein flüssiges Ausgangsmaterial und/oder durch Aufspritzen eines flüssigen Ausgangsmaterials die erste Dünnschicht 106 erzeugt.

Das metallische Zwischenelement 114 wird mit der freien Oberfläche der ersten Dünnschicht 106 in Kontakt gebracht.

Das erste Bauteil 102, das Zwischenelement 114 und die dazwischen angeordnete erste Dünnschicht 106 werden in einen Sinterofen eingebracht und auf eine Sintertemperatur erwärmt, so dass das metallische Zwischenelement 114 durch Versinterung mit der Dünnschicht 106 verbunden wird.

Anschließend wird durch Eintauchen in ein flüssiges Ausgangsmaterial und/oder durch Aufspritzen eines flüssigen Ausgangsmaterials auf die freie Oberfläche 116 des Zwischenelements 114 eine zweite Dünnschicht 106' erzeugt, welche ebenso wie die erste Dünnschicht 106 eine Dicke von höchstens 100 µm, vorzugsweise von höchstens ungefähr 50 µm, aufweist.

Die zweite Dünnschicht 106' kann ebenso wie die erste Dünnschicht 106 einer Wärmebehandlung, unter teilweisem Kristallisieren des gegebenenfalls enthaltenen Glasmaterials, unterzogen werden.

Anschließend wird an der freien Oberfläche der zweiten Dünnschicht 106' in der vorstehend bereits beschriebenen Weise die Benetzungswinkelbegrenzungsschicht 118 erzeugt.

Anschließend wird ein metallisches Lotmaterial auf die freie Oberfläche 120 der Benetzungswinkelbegrenzungsschicht 118 und/oder auf die freie Oberfläche 112 des zweiten Bauteils 104 aufgetragen und/oder zwischen die Benetzungswinkelbegrenzungsschicht 118 und das zweite Bauteil 104 eingebracht, und das metallische zweite Bauteil 104 wird mit der Benetzungswinkelbegrenzungsschicht 118 mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der zweiten Ausführungsform der Dichtungsanordnung 100 beschrieben worden sind.

Eine in Fig. 4 dargestellte vierte Ausführungsform der Dichtungsanordnung 100 unterscheidet sich von der in Fig. 3 dargestellten dritten Ausführungsform dadurch, dass an dem ersten Bauteil 102 nicht nur zwei Dünnschichten 106 und 106', sondern zusätzlich eine dritte Dünnschicht 106" vorhanden sind.

Hierdurch wird die elektrische Isolationswirkung der Dichtungsanordnung 100 bei der Betriebstemperatur des Brennstoffzellenstacks weiter gesteigert.

Zwischen der zweiten Dünnschicht 106' und der dritten Dünnschicht 106" ist dabei ein zweites metallisches Zwischenelement 114' angeordnet.

Die zweite Dünnschicht 106" ist vorzugsweise aus einem bei der Betriebstemperatur des Brennstoffzellenstacks elektrisch isolierenden Glasmaterial und/oder Keramikmaterial gebildet.

Insbesondere kann die dritte Dünnschicht 106" aus demselben Material gebildet sein wie die erste Dünnschicht 106 und/oder die zweite Dünnschicht 106'.

Die dritte Dünnschicht 106" weist eine maximale Dicke von ungefähr 100 µm, insbesondere von höchstens ungefähr 50 µm auf.

Bei der Herstellung der vierten Ausführungsform der Dichtungsanordnung 100 gemäß Fig. 4 wird so vorgegangen, dass abwechselnd eine elektrisch isolierende Dünnschicht an dem ersten Bauteil 102 erzeugt und dann ein metallisches Zwischenelement mit der gerade gebildeten Dünnschicht versintert wird.

Auf diese Weise wird eine alternierende Abfolge von Dünnschichten 106, 106' und 106" und Zwischenelementen 114, 114' erzeugt.

Anschließend wird ein metallisches Lotmaterial auf die freie Oberfläche 110 der obersten Dünnschicht 106" und/oder auf die freie Oberfläche 112 des metallischen zweiten Bauteils 104 aufgetragen und/oder zwischen die oberste Dünnschicht 106" und das zweite Bauteil 104 eingebracht, und das metallische zweite Bauteil 104 wird mit der obersten Dünnschicht 106" mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Zur Vermeidung von unerwünschten Wechselwirkungen zwischen Lot und oberster Dünnschicht kann bei den in Fig. 3 und 4 dargestellten Ausführungsformen der Dichtungsanordnung 100, ebenso wie bei der in Fig. 2 dargestellten zweiten Ausführungsform ein zusätzliches metallisches Zwischenelement zwischen der obersten Dünnschicht 106' bzw. 106" einerseits und der Lotschicht 108 andererseits eingefügt werden (in diesem Falle entfällt die in Fig. 3 dargestellte Benetzungswinkelbegrenzungsschicht 118).

Eine in Fig. 5 dargestellte fünfte Ausführungsform der Dichtungsanordnung 100 unterscheidet sich von der in Fig. 1 dargestellten ersten Ausführungsform dadurch, dass zusätzlich zu der ersten Dünnschicht 106 an dem metallischen ersten Bauteil 102 eine zweite Dünnschicht 106' an dem metallischen zweiten Bauteil 104 angeordnet ist.

Hierdurch wird erreicht, dass die fünfte Ausführungsform einer Dichtungsanordnung 100 eine verbesserte elektrische Isolationswirkung aufweist.

Bei der Herstellung der fünften Ausführungsform der Dichtungsanordnung 100 gemäß Fig. 5 wird wie folgt vorgegangen:
An dem ersten Bauteil 102 und an dem zweiten Bauteil 104 wird jeweils durch Eintauchen in das flüssige Ausgangsmaterial und/oder durch Aufspritzen des flüssigen Ausgangsmaterials jeweils die erste Dünnschicht 106 bzw. die zweite Dünnschicht 106' gebildet und einer Wärmebehandlung unterzogen, um eine teilweise Kristallisation von in der jeweiligen Dünnschicht vorhandenem Glasmaterial zu bewirken.

Die freien Oberflächen 110 bzw. 110' können, wie bei der ersten Ausführungsform, mit einer zusätzlichen keramischen Benetzungswinkelbegrenzungsschicht 118 versehen werden, um den Benetzungswinkel des metallischen Lotmaterials der Lotschicht 108 zu verringern und dadurch die mechanische Festigkeit der Lotverbindung zu erhöhen.

Anschließend wird ein metallisches Lotmaterial auf die freie Oberfläche 110 der ersten Dünnschicht 106 und/oder auf die freie Oberfläche 110' der zweiten Dünnschicht 106' (oder gegebenenfalls auf mindestens eine freie Oberfläche einer Benetzungswinkelbegrenzungsschicht) aufgetragen, und die beiden Dünnschichten 106 und 106' werden mittels des während der Lötung verflüssigten Lotmaterials, unter Anwendung eines Anpressdrucks, verlötet.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Eine in Fig. 6 dargestellte sechste Ausführungsform der Dichtungsanordnung 100 unterscheidet sich von der in Fig. 3 dargestellten dritten Ausführungsform dadurch, dass nicht nur an dem ersten Bauteil 102, sondern auch an dem zweiten Bauteil 104 zwei elektrisch isolierende Dünnschichten, nämlich eine dritte Dünnschicht 106" und eine vierte Dünnschicht 106"', angeordnet sind.

Durch das Vorhandensein von insgesamt vier elektrisch isolierenden Dünnschichten wird die elektrische Isolationswirkung der Dichtungsanordnung 100 bei der Betriebstemperatur des Brennstoffzellenstacks weiter verbessert.

Dabei ist die dritte Dünnschicht 106" direkt an der freien Oberfläche 112 des metallischen zweiten Bauteils 104 angeordnet, während die vierte Dünnschicht 106'" mit der Lotschicht 108 in Kontakt steht.

Die beiden Dünnschichten 106" und 106'" sind durch ein dazwischen angeordnetes metallisches Zwischenelement 114' voneinander getrennt.

Die Dünnschichten 106", 106'" an dem zweiten Bauteil 112 können in derselben Weise hergestellt werden wie die Dünnschichten 106 bzw. 106' an dem ersten Bauteil 102.

Ebenso kann das metallische zweite Zwischenelement 114' in derselben Weise mit der dritten Dünnschicht 106" und der vierten Dünnschicht 106'" verbunden werden, wie dies vorstehend im Zusammenhang mit der Verbindung des metallischen ersten Zwischenelements 114 mit der ersten Dünnschicht 106 und der zweiten Dünnschicht 106' beschrieben worden ist.

Die freien Oberflächen 110 bzw. 110' der zweiten Dünnschicht 106' bzw. der vierten Dünnschicht 106"' können wahlweise mit einer keramischen Benetzungswinkelbegrenzungsschicht 118 versehen werden.

Anschließend wird ein metallisches Lotmaterial auf die freie Oberfläche 110 der zweiten Dünnschicht 106' und/oder auf die freie Oberfläche 110' der vierten Dünnschicht 106'" (oder gegebenenfalls auf mindestens eine freie Oberfläche einer Benetzungswinkelbegrenzungsschicht) aufgetragen, und die zweite Dünnschicht 106' und die vierte Dünnschicht 106'" werden mittels des während der Lötung verflüssigten Lotmaterials, unter Anwendung eines Anpressdrucks, miteinander verlötet.

Als Lotmaterial können dabei dieselben Lotmaterialien verwendet werden, die vorstehend im Zusammenhang mit der Herstellung der ersten Ausführungsform der Dichtungsanordnung 100 beschrieben worden sind.

Zur Vermeidung von unerwünschten Wechselwirkungen zwischen dem metallischen Lotmaterial der Lotschicht 108 einerseits und den jeweils angrenzenden Dünnschichten andererseits kann auch bei den in den Fig. 5 und 6 dargestellten Ausführungsformen der Dichtungsanordnung 100 ein zusätzliches metallisches Zwischenelement zwischen eine oder beide der direkt an die Lotschicht 108 angrenzenden Dünnschichten 106, 106' bzw. 106"' einerseits und die Lotschicht 108 andererseits eingefügt werden, wie dies vorstehend bereits im Zusammenhang mit der in Fig. 2 dargestellten zweiten Ausführungsform der Dichtungsanordnung 100 beschrieben worden ist.

## Patentansprüche

1. Verfahren zur Herstellung einer elektrisch isolierenden Dichtungsanordnung (100) zum Abdichten zwischen zwei Bauteilen (102, 104) eines Brennstoffzellenstacks, umfassend folgende Verfahrensschritte:
- Erzeugen mindestens einer Dünnschicht (106), welche ein Glasmaterial und/oder ein Keramikmaterial umfasst, durch zumindest teilweises Eintauchen mindestens eines der abzudichtenden Bauteile (102, 104) in ein flüssiges Ausgangsmaterial und/oder durch Aufspritzen eines flüssigen Ausgangsmaterials auf zumindest einen Teil mindestens eines der abzudichtenden Bauteile (102, 104);
- Verlöten des mit der Dünnschicht (106) versehenen Bauteils (102) mit dem anderen abzudichtenden Bauteil (104) mittels eines metallischen Lotes;
**dadurch gekennzeichnet,**
**dass** mindestens zwei voneinander beabstandete Dünnschichten (106; 106'; 106"; 106"') erzeugt werden, welche ein Glasmaterial und/oder ein keramisches Material umfassen,
wobei die Schichtdicke der Dünnschichten (106) höchstens 100 µm und mindestens 0,5 µm beträgt.

2. Verfahren nach Anspruch 1, **dadurch gekennzeichnet, dass** die Schichtdicke der Dünnschicht (106) höchstens 50 µm beträgt.

3. Verfahren nach einem der Ansprüche 1 oder 2, **dadurch gekennzeichnet, dass** das Verfahren ferner den folgenden Verfahrensschritt umfasst:
- Erzeugen einer metallischen Beschichtung auf der Dünnschicht (106) vor dem Verlöten mit dem anderen abzudichtenden Bauteil (104).

4. Verfahren nach einem der Ansprüche 1 bis 3, **dadurch gekennzeichnet, dass** mindestens zwei Dünnschichten (106, 106'; 106", 106"') an demselben der abzudichtenden Bauteile (102, 104) erzeugt werden.

5. Verfahren nach einem der Ansprüche 1 bis 4, **dadurch gekennzeichnet, dass** mindestens zwei Dünnschichten (106, 106') an zwei verschiedenen der abzudichtenden Bauteile (102, 104) erzeugt werden.

6. Verfahren nach einem der Ansprüche 1 bis 5, **dadurch gekennzeichnet, dass** das Verfahren ferner folgenden Verfahrensschritt umfasst:
- Wärmebehandlung mindestens einer erzeugten Dünnschicht (106), bei welcher das Material der Dünnschicht (106) zumindest teilweise aufgeschmolzen wird und zumindest teilweise kristallisiert.

7. Verfahren nach einem der Ansprüche 1 bis 6, **dadurch gekennzeichnet, dass** das Verfahren den folgenden weiteren Verfahrensschritt umfasst:
- Erzeugen mindestens einer Benetzungswinkelbegrenzungsschicht (118) an einem mit einer Dünnschicht (106; 106') versehenen abzudichtenden Bauteil (102) vor dem Verlöten mit dem anderen abzudichtenden Bauteil (104).

8. Verfahren nach Anspruch 7, **dadurch gekennzeichnet, dass** die Benetzungswinkelbegrenzungsschicht (118) ein Oxidkeramikmaterial umfasst.

9. Verfahren nach einem der Ansprüche 7 oder 8, **dadurch gekennzeichnet, dass** die Benetzungswinkelbegrenzungsschicht (118) Kupferoxid, Aluminiumoxid, Titanoxid, Zirkoniumoxid und/oder Yttrium-stabilisiertes Zirkoniumoxid umfasst.

10. Verfahren nach einem der Ansprüche 1 bis 9, **dadurch gekennzeichnet, dass** die erzeugte Dünnschicht (106) Partikel enthält, welche ein Oxidkeramikmaterial umfassen.

11. Verfahren nach Anspruch 10, **dadurch gekennzeichnet, dass** das Oxidkeramikmaterial ein Metalloxidmaterial umfasst.

12. Verfahren nach Anspruch 11, **dadurch gekennzeichnet, dass** das Metalloxidmaterial als Metallkationen Al, Zr und/oder Mg enthält.

13. Verfahren nach einem der Ansprüche 10 bis 12, **dadurch gekennzeichnet, dass** der mittlere Durchmesser der Partikel bei 10 µm bis 100 µm liegt.

14. Verfahren nach einem der Ansprüche 1 bis 13, **dadurch gekennzeichnet, dass** das Glasmaterial und/oder das Keramikmaterial ein Glas des Systems BaO - CaO - SiO₂, ein Glas des Systems BaO - CaO - SiO₂ - Al₂O₃ und/oder ein Glas des Systems BaO - CaO - SiO₂ Al₂O₃ - B₂O₃ umfasst.

15. Brennstoffzellenstack, umfassend eine Dichtungsanordnung zum Abdichten zwischen zwei Bauteilen (102, 104) des Brennstoffzellenstacks, umfassend
- mindestens eine elektrisch isolierende Dünnschicht (106), welche ein Glasmaterial und/oder ein Keramikmaterial umfasst und durch zumindest teilweises Eintauchen eines der abzudichtenden Bauteile (102, 104) in ein flüssiges Ausgangsmaterial und/oder durch Aufspritzen eines flüssigen Ausgangsmaterials auf zumindest einen Teil eines der abzudichtenden Bauteile (102, 104) erzeugt ist; und
- eine Lotschicht (108), welche ein metallisches Lot umfasst;
**dadurch gekennzeichnet,**
**dass** die Dichtungsanordnung mindestens zwei voneinander beabstandete Dünnschichten (106; 106'; 106"; 106"') umfasst, welche ein Glasmaterial und/oder ein keramisches Material umfassen,
wobei die Schichtdicke der Dünnschichten (106) höchstens 100 µm und mindestens 0,5 µm beträgt.

## Claims

1. Method for producing an electrically insulating sealing arrangement (100) for sealing between two components (102, 104) of a fuel cell stack, comprising the following method steps:
- producing at least one thin layer (106), which comprises a glass material and/or a ceramic material, by at least partial immersion of at least one of the components (102, 104) to be sealed in a liquid starting material and/or by spraying a liquid starting material on at least a part of at least one of the components (102, 104) to be sealed;
- brazing the component (102) provided with the thin layer (106) to the other component (104) to be sealed by means of a metallic braze;
**characterised in that** there are produced at least two thin layers (106; 106'; 106"; 106"') that are spaced apart from each other and comprise a glass material and/or a ceramic material, the layer thickness of the thin layers (106) being at most 100 µm and at least 0.5 µm.

2. Method according to claim 1, **characterised in that** the layer thickness of the thin layer (106) is at most 50 µm.

3. Method according to either of claims 1 or 2, **characterised in that** the method furthermore comprises the following method step:
- producing a metallic coating on the thin layer (106) before brazing to the other component (104) to be sealed.

4. Method according to any one of claims 1 to 3, **characterised in that** at least two thin layers (106, 106'; 106", 106"') are produced on the same one of the components (102, 104) to be sealed.

5. Method according to any one of claims 1 to 4, **characterised in that** at least two thin layers (106, 106') are produced on two different ones of the components (102, 104) to be sealed.

6. Method according to any one of claims 1 to 5, **characterised in that** the method furthermore comprises the following method step:
- heat treatment of at least one produced thin layer (106), wherein the material of the thin layer (106) is at least partially melted on and at least partially crystallised.

7. Method according to any one of claims 1 to 6, **characterised in that** the method comprises the following further method step:
- producing at least one wetting angle limitation layer (118) on a component (102) provided with a thin layer (106; 106') and to be sealed before brazing to the other component (104) to be sealed.

8. Method according to claim 7, **characterised in that** the wetting angle limitation layer (118) comprises an oxide ceramic material.

9. Method according to either of claims 7 or 8, **characterised in that** the wetting angle limitation layer (118) comprises copper oxide, aluminium oxide, titanium oxide, zirconium oxide and/or yttrium-stabilised zirconium oxide.

10. Method according to any one of claims 1 to 9, **characterised in that** the thin layer (106) produced contains particles comprising an oxide ceramic material.

11. Method according to claim 10, **characterised in that** the oxide ceramic material comprises a metal oxide material.

12. Method according to claim 11, **characterised in that** the metal oxide material contains Al, Zr and/or Mg as metal cations.

13. Method according to any one of claims 10 to 12, **characterised in that** the mean diameter of the particles is 10 µm to 100 µm.

14. Method according to any one of claims 1 to 13, **characterised in that** the glass material and/or the ceramic material comprises a glass of the system BaO - CaO - SiO₂, a glass of the system BaO - CaO - SiO₂ - Al₂O₃ and/or a glass of the system BaO - CaO - SiO₂ - Al₂O₃ - B₂O₃.

15. Fuel cell stack, comprising a sealing arrangement for sealing between two components (102, 104) of the fuel cell stack, comprising
- at least one electrically insulating thin layer (106), which comprises a glass material and/or a ceramic material and is produced by at least partial immersion of one of the components (102, 104) to be sealed in a liquid starting material and/or by spraying a liquid starting material onto at least a part of one of the components (102, 104) to be sealed; and
- a braze layer (108), which comprises a metallic braze;
**characterised in that** the sealing arrangement comprises at least two thin layers (106, 106'; 106"; 106"') that are spaced apart from one another and comprise a glass material and/or a ceramic material, the layer thickness of the thin layers (106) being at most 100 µm and at least 0.5 µm.

## Revendications

1. Procédé de fabrication d'un agencement d'étanchéité à isolation électrique (100) destiné à étanchéifier entre deux composants (102, 104) d'un bloc de pile à combustible, comprenant les étapes de procédé suivantes :
- production d'au moins une couche mince (106), qui comprend un matériau de verre et/ou un matériau de céramique, par immersion au moins partielle d'au moins un des composants à étanchéifier (102, 104) dans une matière première liquide et/ou par projection d'une matière première liquide sur au moins une partie d'au moins un des composants à étanchéifier (102, 104) ;
- brasage du composant (102) muni de la couche mince (106) avec l'autre composant à étanchéifier (104) au moyen d'une brasure métallique ;
**caractérisé en ce que** l'on produit au moins deux couches minces espacées l'une de l'autre (106 ; 106' ; 106" ; 106"'), qui comprennent un matériau de verre et/ou un matériau céramique,
dans lequel l'épaisseur de couche des couches minces (106) vaut au maximum 100 µm et au minimum 0,5 µm.

2. Procédé selon la revendication 1, **caractérisé en ce que** l'épaisseur de couche de la couche mince (106) vaut au maximum 50 µm.

3. Procédé selon l'une quelconque des revendications 1 ou 2, **caractérisé en ce que** le procédé comprend en outre l'étape de procédé suivante :
- production d'un revêtement métallique sur la couche mince (106) avant le brasage avec l'autre composant à étanchéifier (104).

4. Procédé selon l'une quelconque des revendications 1 à 3, **caractérisé en ce que** l'on produit au moins deux couches minces (106, 106' ; 106", 106"') sur le même des composants à étanchéifier (102, 104).

5. Procédé selon l'une quelconque des revendications 1 à 4, **caractérisé en ce que** l'on produit au moins deux couches minces (106, 106') sur deux différents des composants à étanchéifier (102, 104).

6. Procédé selon l'une quelconque des revendications 1 à 5, **caractérisé en ce que** le procédé comprend en outre l'étape de procédé suivante :
- traitement thermique d'au moins une couche mince produite (106), au cours duquel le matériau de la couche mince (106) est au moins partiellement fondu et au moins partiellement cristallisé.

7. Procédé selon l'une quelconque des revendications 1 à 6, **caractérisé en ce que** le procédé comprend l'étape de procédé additionnelle suivante :
- production d'au moins une couche de limitation de l'angle de mouillage (118) sur un composant à étanchéifier (102) muni d'une couche mince (106 ; 106') avant le brasage avec l'autre composant à étanchéifier (104).

8. Procédé selon la revendication 7, **caractérisé en ce que** la couche de limitation de l'angle de mouillage (118) comprend un matériau d'oxyde céramique.

9. Procédé selon l'une quelconque des revendications 7 ou 8, **caractérisé en ce que** la couche de limitation de l'angle de mouillage (118) comprend de l'oxyde de cuivre, de l'oxyde d'aluminium, de l'oxyde de titane, de l'oxyde de zirconium et/ou de l'oxyde de zirconium stabilisé à l'yttrium.

10. Procédé selon l'une quelconque des revendications 1 à 9, **caractérisé en ce que** la couche mince produite (106) contient des particules, qui comprennent un matériau d'oxyde céramique.

11. Procédé selon la revendication 10, **caractérisé en ce que** le matériau d'oxyde céramique comprend un matériau d'oxyde métallique.

12. Procédé selon la revendication 11, **caractérisé en ce que** le matériau d'oxyde métallique contient du Al, Zr et/ou Mg comme cations métalliques.

13. Procédé selon l'une quelconque des revendications 10 à 12, **caractérisé en ce que** le diamètre moyen des particules vaut de 10 µm à 100 µm.

14. Procédé selon l'une quelconque des revendications 1 à 13, **caractérisé en ce que** le matériau de verre et/ou le matériau de céramique comprend un verre du système BaO - CaO - SiO₂, un verre du système BaO - CaO - SiO₂ - Al₂O₃ et/ou un verre du système BaO - CaO - SiO₂ - Al₂O₂ - B₂O₃.

15. Bloc de pile à combustible, comprenant un agencement d'étanchéité destiné à étanchéifier entre deux composants (102, 104) du bloc de pile à combustible, comprenant :
- au moins une couche mince à isolation électrique (106), qui comprend un matériau de verre et/ou un matériau de céramique et qui est produite par immersion au moins partielle d'un des composants à étanchéifier (102, 104) dans une matière première liquide et/ou par projection d'une matière première liquide sur au moins une partie d'un des composants à étanchéifier (102, 104) ; et
- une couche de brasure (108), qui comprend une brasure métallique ;
**caractérisé en ce que** l'agencement d'étanchéité comprend au moins deux couches minces espacées l'une de l'autre (106 ; 106' ; 106" ; 106"'), qui comprennent un matériau de verre et/ou un matériau céramique, dans lequel l'épaisseur de couche des couches minces (106) vaut au maximum 100 µm et au minimum 0,5 µm.
